# EUROPEAN PATENT SPECIFICATION

(11) **EP 4 638 970 B1**
(45) Date of publication and mention of the grant of the patent: **26.08.2026**
(21) Application number: 23800969.0
(22) Date of filing: 25.10.2023
(51) Int. Cl.: F04D 13/06, H02K 3/52, H02K 11/33

(54) **PUMP GROUP**
PUMPENGRUPPE
GROUPE DE POMPE

(30) Priority: 22.12.2022 IT 202200026481
(43) Date of publication of application: 29.10.2025
(73) Proprietor: Industrie Saleri Italo S.P.A., 25065 Lumezzane, Brescia (IT)
(72) Inventor: PELLEGRINI, Dario, 25065 Lumezzane, Brescia (IT)
(74) Representative: Gamba, Alessandro
(86) International application number: PCT/IB2023/060754
(87) International publication number: WO 2024/134292

(56) References cited:
- WO-A1-2019/057430
- WO-A1-2021/185131
- US-A1- 2018 245 597
- US-A1- 2020 091 794
- US-A1- 2022 278 583

## Description

The present invention relates to a pump group of a cooling system of a vehicle.

In this disclosure, the term "vehicle" relates to any means of locomotion, without any limitation related to type or size, i.e., a motorcycle, a motorcar, or a tractor trailer.

In other words, the present invention relates to the automotive field, and in detail to the thermal management system of an operating group of a vehicle.

In particular, in the present disclosure, "operating group" means a specific component or group of components for carrying out a given operation necessary for the motion of the vehicle. In a preferred embodiment, the "operating group" comprises the motor group, e.g., of endothermic, electric, or hybrid type.

In further constructional variants, the "operating group" comprises other vehicle components, either mechanical, such as a transmission group, or electrical, such as a "battery pack" or "electric motor".

In the prior art, multiple embodiments of pump groups for a cooling system of an operating group are known, which are distinguished by the actuation types.

Specifically, the pump group of the present invention fits into such a context, being of the electrically actuated type. In other words, the pump group of the present invention comprises at least one electric motor, which guides the rotary movement of the impeller assembly included therein, thus commanding the movement of the cooling liquid which flows in the cooling system to which the pump group is fluidically connectable. Furthermore, the pump group comprises an electronic command board suitable for commanding the operation of the electric motor according to the demands of the vehicle, while also managing abnormal or emergency situations.

A variety of technical solutions of pump groups comprising an electric drive with electric motor and electronic command board are known.

A typical problem addressed in such products is that of achieving an electrical connection between the electric motor and the electronic command board which is correct, certain over time, and possibly easy to implement.

Indeed, embodiments are known, in which the connection between stator and electronic command board is correct and certain over time (i.e., not subject to breakage or detachment, for example due to vibrations transmitted to the pump group) is a critical point of the assembly, requiring to perform complex and costly manufacturing operations. Pump groups known in the prior art and suffering from these drawbacks are disclosed in documents WO2021/185131A1, WO2019/057430A1 and US2020/091794A1.

Therefore, it is the object of the present invention to provide a pump group for a cooling system of an operating group of a vehicle which solves such typical problems of the prior art. In other words, it is the object of the present invention to provide a pump group the connection of which between stator and electronic command board is always correct, certain over time, and most importantly achieved by means of simple group operations.

Such an object is achieved by a pump group according to claim 1. The claims dependent thereon relate to preferred constructional variants having further advantageous aspects.

The object of the present invention will now be described in detail, with the aid of the accompanying drawings, in which:

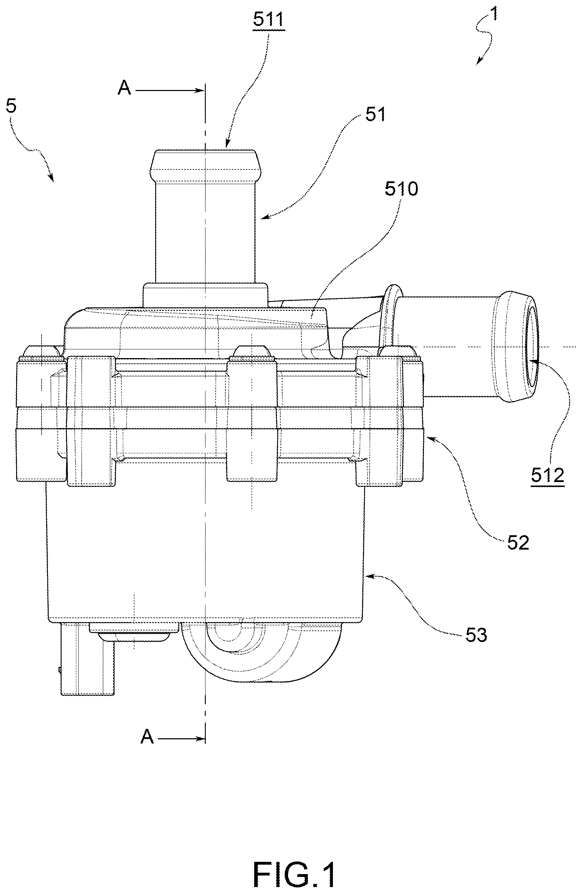

- figure 1 shows a side view of the pump group according to a preferred embodiment of the present invention in an assembled configuration;
- figure 2 shows an axial section view of the pump group taken along the section plane A-A in figure 1;
- figure 2a is an enlarged view of an area of the pump group in figure 2;

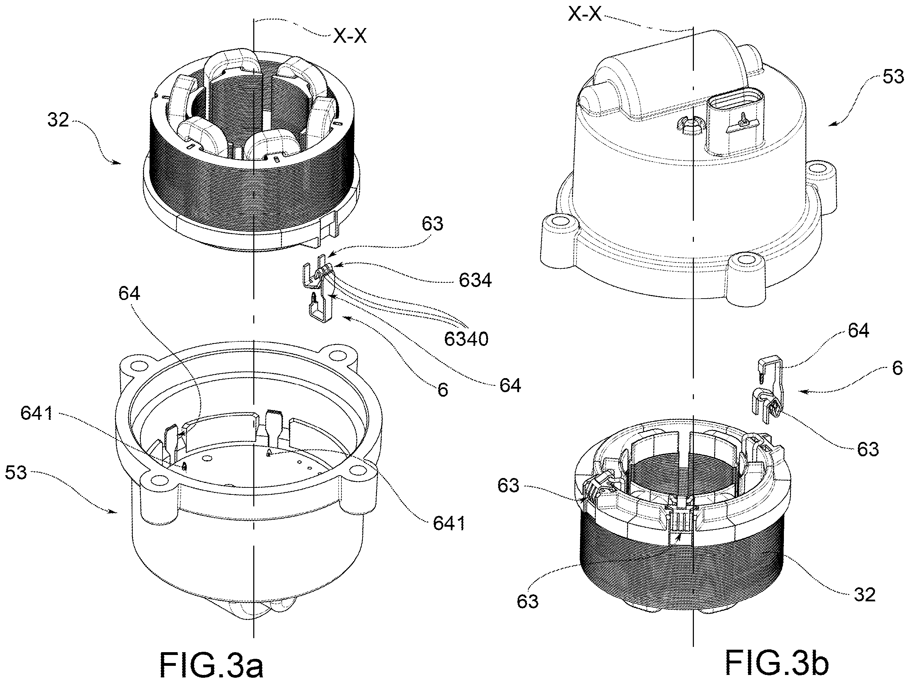

- figures 3a and 3b show two perspective view with parts separated of some components included in the pump group of the present invention, according to a preferred embodiment;

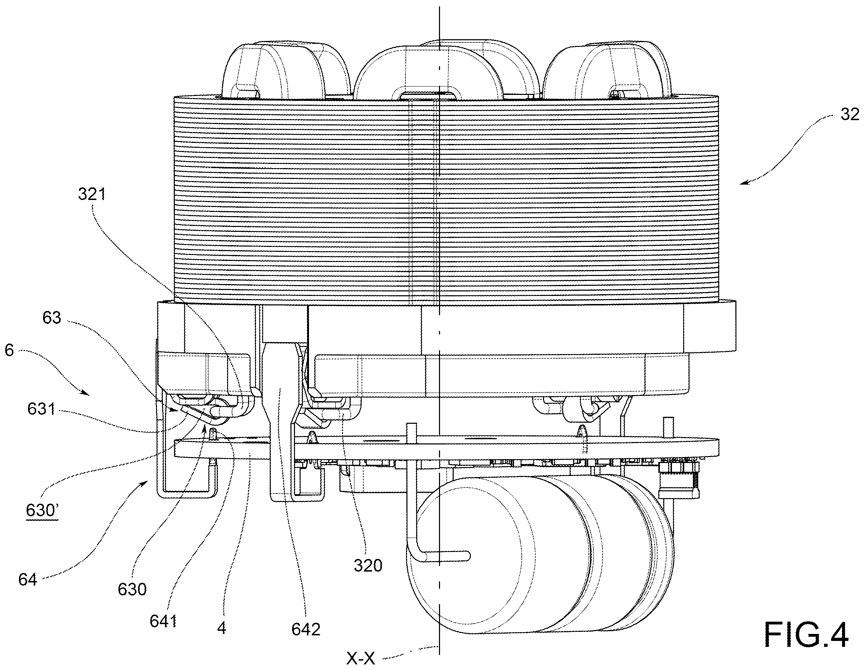

- figure 4 is a side view of some components assembled together, included in the pump group of the present invention, according to a preferred embodiment.

In the aforesaid drawings, reference numeral 1 indicates as a whole a pump group for a cooling system of an operating group of a vehicle, e.g., of the internal combustion type.

The pump group 1 of the present invention extends mainly lengthwise with respect to axis X-X.

According to the present invention, the pump group 1 comprises an impeller assembly 2, widely described below, rotatable with respect to the axis X-X.

According to the present invention, the pump group 1 comprises an electric motor 3 comprising a rotor 31 engaged with the impeller assembly 2 and a stator 32, which circumferentially surrounds the rotor 31.

Preferably, said electric motor 3 is of the brushless type.

Preferably, the rotor 31 is of the permanent magnet type.

According to the present invention, the pump group 1 comprises an electronic command board 4 for commanding the electric motor 3.

Preferably, the electronic command board 4 is positioned axially distal from the impeller assembly 2.

According to the present invention, the pump group 1 comprises a pump body 5 for supporting and containing the components. Indeed, the pump body 5 is fluidically connectable to the pipes of the cooling system, in which the cooling liquid moved by the pump group 1 flows.

According to a preferred embodiment, the "cooling liquid" is a water-based liquid, e.g., a solution comprising water and glycol.

According to a further preferred embodiment, the "cooling liquid" is an oil-based liquid.

Said pump body 5 comprises a first element 51, an intermediate element 52, and a second element 53. In other words, the pump body 5 comprises three distinct elements, which define the pump body 5 when assembled.

According to the present invention, the coupling between the first element 51 and the intermediate element 52 delimits a first chamber 500', or wet chamber.

According to the present invention, the coupling between intermediate element 52 and second element 53 defines a second chamber 500', or dry chamber. Indeed, the two chambers are mutually sealed.

According to a preferred embodiment, the first element 51, the intermediate element 52, and the second element 53 are mutually engaged along the axis X-X, where the intermediate element 52 is sandwiched between the first element 51 and the second element 53.

According to a preferred embodiment, the first element 51 and the second element 53 are mutually engaged along the axis X-X, and the intermediate element 52 is housed in the space defined by them.

According to the present invention, said intermediate element 52 comprises a side wall 522, which extends parallel to the axis X-X.

Furthermore, the intermediate element 52 comprises a head wall 521 and a bottom wall 523.

According to a preferred embodiment, the pump body 2 is made of a material chosen from the polymer families.

Preferably, the pump body 2 is made of PPS GF40, PA 6.10 or PBT GF20.

According to the present invention, the impeller assembly 2 and the rotor 31 are housed in the first chamber 500'. The stator 32 and electronic command board 4, on the other hand, are housed in the second chamber 500".

According to a preferred embodiment, the pump group 1 comprises a fixed shaft 8 housed in the first chamber 500'.

Preferably, the fixed shaft 8 is made of a material chosen from steel alloys, preferably is made of chromium steel alloy.

The fixed shaft 8 extends along the axis X-X between a first end 81 a second end 82 integrally connected to the bottom wall 523.

In other words, the fixed shaft 8 is cantilevered with respect to said bottom wall 523.

According to a preferred embodiment, the second end 82 engages the bottom wall 523 by means of a geometric, interference coupling.

According to a preferred embodiment, the impeller assembly 2 comprises a blade element 20 and a rotating shaft 21 fitted onto the fixed shaft 4 engaged with the blade element 20 and the rotor 31.

In other words, the blade element 20 is engaged with said rotating shaft 21, so that the rotation of the rotating shaft 21 results in the rotation of the blade element 20.

According to the present invention, the pump group 1 further comprises a fixed bushing 9 positioned at the end of the fixed shaft 8, preferably integrally engaged with the first end 81, to provide an axial abutment for the impeller assembly 2.

Preferably, the axial bushing 9 is cylindrical, conical, or flanged in shape.

Preferably, the axial bushing 9 is fixed to the fixed shaft 8 being engaged with geometric interference therewith.

According to a preferred embodiment, the blade element 20 is positioned between said head wall 521 and the first element 51.

According to a preferred embodiment, the first element 51 comprises an inlet opening 511 on the axis X-X and a radial outlet 512, where the first element 51 is shaped defining a volute 510.

According to the present invention, the pump group 1 comprises a plurality of electrical connection groups 6.

Preferably, the pump group 1 comprises a number of electrical connection groups 6 equal to the number of phases of the stator 32. Preferably, the pump group 1 comprises three electrical connection groups 6. Preferably, the electrical connection groups 6 are positioned to be mutually angularly spaced apart. Preferably, the electrical connection groups 6 are positioned to be mutually angularly spaced at different angles.

Each electrical connection group 6 comprises a stator device 63 and a board device 64 engaged with and electrically connected to the stator 32 and the electronic command board 4, respectively.

According to a preferred embodiment, the stator device 63 is on board the stator 32 protruding therefrom in the radial direction. Preferably, indeed, the stator device 63 does not protrude in the axial direction, thus being axially lower than the windings included in the stator 32.

Preferably, the board device 64 protrudes in an axial direction from the circuit board 4.

According to a preferred embodiment, the stator device 63 comprises a connecting portion 634 radially elastically yielding, so that in the contact between the stator device 63 and the board device 64, said connecting portion 634 is in a compressed configuration.

In other words, the stator device 63 and the board device 64 are suitable for mutually engaging in the axial direction, and in said engagement the board device 64 is pressed radially into the connecting portion 634 thereof.

According to a preferred embodiment, the connecting portion 634 comprises a connection vertex 634' and two sections 634" extending from the connection vertex 634', so that with the connection vertex 634' engaged with the board device 64, said sections 634" are compressed.

Preferably, the two sections 634' extend in a substantially radial direction from the connection vertex 634'.

In other words, the stator device 63 is an element the shape of which confers the feature of being elastically yielding.

According to a preferred embodiment, the stator device 63 comprises a hollow end 630, engaged by a portion of the electrical stator cable 320, suitable for electrically connecting the stator 32 to the stator device 63. In other words, the electric stator cable 320 housed in said cable end 630 performs the stator winding termination.

Preferably, said hollow end 630 is a wing 631 folded on itself identifying a hollow region 630'. The electric cable 320 extends through said hollow region 630' .

According to a preferred embodiment, the connecting portion 634 comprises three mutually separated and elastically yielding segments 6340. Preferably, each segment is elastically yielding independently of the others.

According to an embodiment, the board device 64 is substantially "U"-shaped. Preferably, the two legs of the "U" have different lengths, as shown by way of example in the accompanying figures.

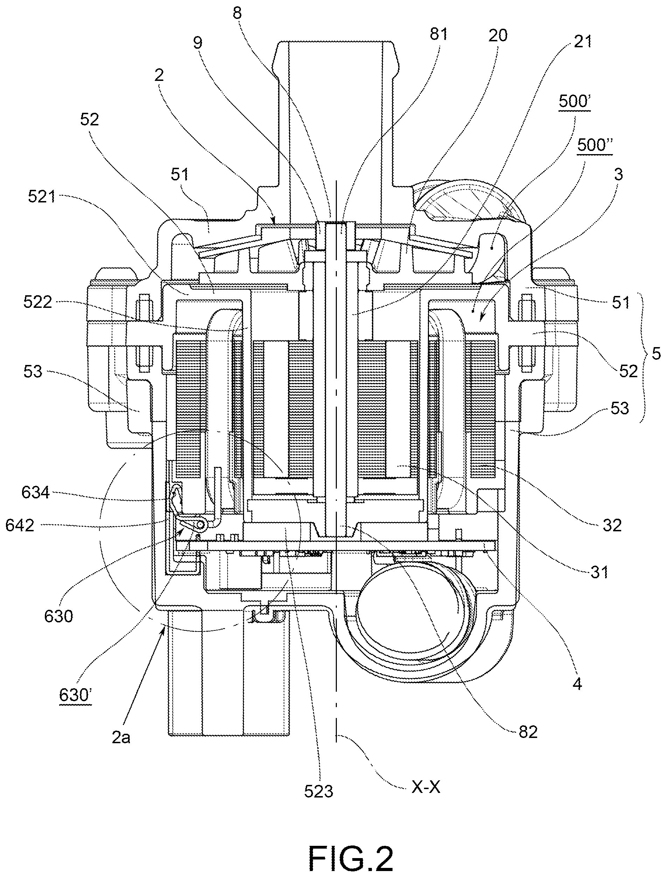

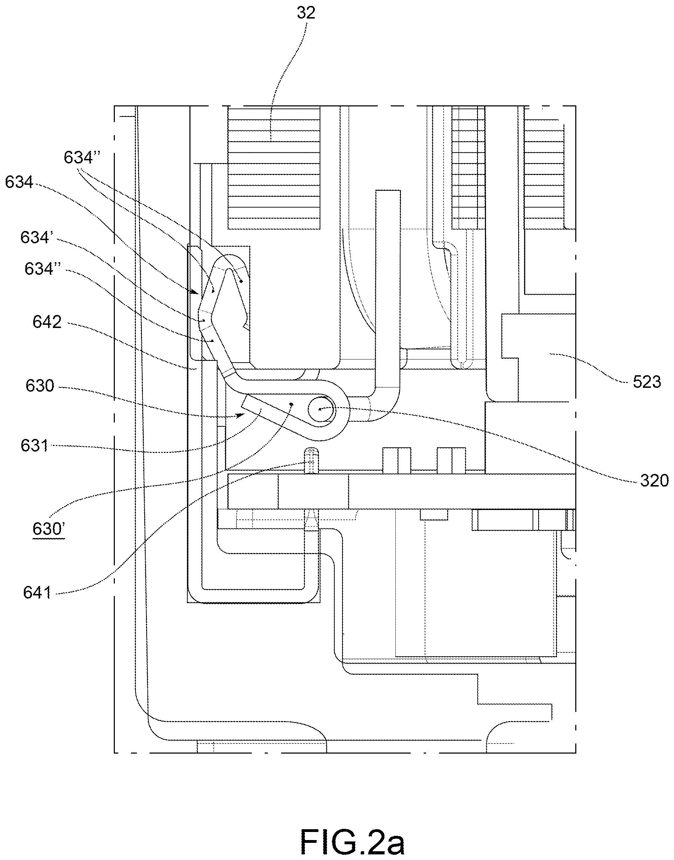

Preferably, the board device 64 comprises a board contact end 641, engaged and electrically connected to the electronic command board 4, and a connecting end 642 engageable by (or with) the connecting portion 634. Preferably, the board contact end 641 is proximal to the axis X-X, while the connecting end 642 is distal from the axis X-X. In an embodiment, the board device 64 extends along the axis X-X and comprises a board contact end 641 engaged with and electrically connected to the electronic command board 4, and a connecting end 642 spaced apart from the electronic command board 4 along the axis X-X. Preferably, with the stator 32 inserted into the second element 53, an operating portion of the stator 32 performs an elastic deformation or movement action, for example in the radial direction with respect to the axis X-X, of the connecting portion 634 of the stator device 63, preferably of at least one section 634", preferably of at least one segment 6340. Preferably, the operating portion of the stator 32 puts the connecting portion 634 of stator device 63 into electrical contact with the connecting end 642 of the board device 64. Preferably, the operating portion is an electrically insulating portion of the stator 32, that is to say it prevents electrical conduction, for example it is a support portion of the stator winding. For example, such features are shown in figures 2 and 2a.

According to a preferred embodiment, the contact end board 641 engages the electronic command board 4 by crossing it. Preferably, the contact end board 641 is of the press-fit type, thus not requiring special soldering operations to engage the electronic command board 4.

According to a preferred embodiment, the connecting end 642 is positioned on the second element 53. That is, the connecting end 642 is supported in the radial direction by the side walls of the second element 53.

According to a preferred embodiment, the stator element 63 is an appropriately bent, single metal component.

According to a preferred embodiment, the stator device 63 is obtained from a specially cut and folded metal sheet.

Preferably, the stator device 63 is made of metal material, e.g., copper or a copper alloy, such as copper-tin or copper-iron, with a tin-plating treatment.

According to a preferred embodiment, the board element 64 is an appropriately bent, single metal component.

According to a preferred embodiment, the board device 64 is obtained from a specially cut and bent metal sheet.

Preferably, the electronic board device 64 is made of metal material, e.g., copper, or a copper alloy, such as copper-nickel-silicon, with a tin-plating treatment.

According to a preferred embodiment, the stator 32 radially engages the second element 53. In other words, the stator 32 has its outer circumferential wall resting on the side wall of the second element 53.

According to a preferred embodiment, the connecting portion 634 is elastically yieldable so that in the radial engagement of the stator 32 with the second element 52, said connecting portion 634 is in a pre-loaded configuration.

According to the present invention, the operations for assembling the pump group 1 involve the installation of the electronic command board 4 in the second element 53; the board devices 64 are on board (co-molded with) the second element 53, and when inserting the electronic command board 4, it engages them. Preferably, it is further possible to optically check that all press-fits are properly inserted into the holes of the electronic command board 4. Afterward, the stator 32 is inserted in the axial direction, to which the respective stator devices 63 are mounted.

Preferably, the axial insertion of the stator 32 into the second element 53 elastically preloads the respective connecting portions 634.

Preferably, the axial insertion of the stator 32 into the second element 53 occurs up to the axial limit stop, which corresponds to the correct positioning of the stator in the second element 53. Preferably, such a position corresponds to the stator engagement with an abutment step included in the second element 53.

Preferably, in such an assembled position, the connecting portions 634 are engaged, and pressed radially, by the respective board devices 64.

Innovatively, the pump group largely fulfills its intended purpose by overcoming the typical problems of the prior art.

Advantageously, indeed, by means of the electrical connection groups, the stator and the electronic command board are in safe electrical contact.

Advantageously, indeed, by means of the electrical connection groups, the stator and the electronic command board are in electrical contact ensured over time.

Advantageously, indeed, by means of the electrical connection groups, the electrical contact between the stator and the electronic command board is performed in a simple, intuitive, and error-proof manner.

Advantageously, indeed, by means of the electrical connection groups, any group tolerances are recovered.

Advantageously, the electrical contact between the stator and the stator device is simple, safe, and reliable over time.

Advantageously, the electrical contact between electronic board and board device is simple, safe, and reliable over time.

Advantageously, the pump group has a simple construction.

It is apparent that, in order to meet contingent needs, those skilled in the art may make changes to the above-described invention, all contained within the scope of protection as defined by the following claims.

## Claims

1. A pump group (1) for a cooling system of an operating group of a vehicle, which extends with respect to an axis (X-X) and comprises:
i) an impeller assembly (2) rotatable with respect to the axis (X-X);
ii) an electric motor (3) comprising a rotor (31) engaged with the impeller assembly (2) and a stator (32) circumferentially surrounding the rotor (31);
iii) an electronic command board (4) for commanding the electric motor (3), positioned in an end region of the pump assembly (1);
iv) a pump body (5) comprising a first element (51), an intermediate element (52), and a second element (53), wherein the coupling between the first element (51) and the intermediate element (52) delimits a first chamber (500'), or wet chamber, wherein the coupling between the intermediate element (52) and the second element (53) defines a second chamber (500'), or dry chamber, wherein the impeller assembly (2) is housed in the first chamber (500'), and wherein the stator (32) and the electronic command board (4) are housed in the second chamber (500");
v) a plurality of electrical connection groups (6), preferably in a number equal to the amount of stator phases, wherein each electrical connection group (6) comprises a stator device (63) and a board device (64) respectively engaged and electrically connected to the stator (32) and the electronic command board (4);
wherein the pump group (1) is **characterized in that** the stator device (63) comprises a connecting portion (634) radially elastically yielding so that in the contact between the stator device (63) and the board device (64) said connecting portion (634) is in a compressed configuration.

2. Pump group (1) according to claim 1, wherein the connecting portion (634) comprises a connection vertex (634') and two sections (634") extending from the connection vertex (634'), so that with the connection vertex (634') engaged with the board device (64) said sections (634") are compressed.

3. Pump group (1) according to any one of the preceding claims, wherein both the stator device (63) and the board device (64) are appropriately folded single metal components, respectively.

4. Pump group (1) according to claim 2, wherein both the stator device (63) and the board device (64) are made of a conductive material, for example they are made of a metal material, preferably of copper or copper alloy.

5. Pump group (1) according to any one of the preceding claims, wherein the stator device (63) comprises a cable end (630), engaged by an electrical stator cable (320), suitable for electrically connecting the stator (32) to the stator device (63), wherein said cable end (630) is a wing (631) folded on itself identifying a hollow region (630').

6. Pump group (1) according to any one of the preceding claims, wherein the connecting portion (634) comprises a plurality, preferably three, segments (6340) mutually separated and elastically yieldable.

7. Pump group (1) according to any one of the preceding claims, wherein the board device (64) is substantially "U-shaped", comprising a board contact end (641) engaged with and electrically connected to the electronic command board (4), and a connecting end (642) engageable by the connecting portion (634).

8. Pump group (1) according to claim 7, wherein the connecting end (642) is positioned on the second element (53).

9. Pump group (1) according to any one of the preceding claims, wherein the stator (32) radially engages the second element (53).

10. Pump group (1) according to any one of the preceding claims, wherein the connecting portion (634) is elastically yieldable so that in the radial engagement of the stator (32) with the second element (53), said connecting portion (634) is in a pre-loaded configuration.

11. Pump group (1) according to any one of the preceding claims, wherein the intermediate element (52) comprises a head wall (521), a side wall (522) parallel to the axis (X-X) and positioned between the rotor (31) and the stator (32), and a bottom wall (523), wherein the pump assembly (1) further comprises a fixed shaft (8) positioned at the axis (X-X), solidly engaged with the bottom wall (523), wherein the impeller assembly (2) and the rotor (31) are rotationally free on the fixed shaft (8).

12. Pump group (1) according to claim 11, comprising a fixed bushing (9) positioned at the end of the fixed shaft (8) to provide the impeller assembly (2) with an axial backing.

## Patentansprüche

1. Pumpengruppe (1) für ein Kühlsystem einer Betriebsgruppe eines Fahrzeugs, die sich in Bezug auf eine Achse (X-X) erstreckt und umfasst:
i) eine Impelleranordnung (2), die in Bezug auf die Achse (X-X) drehbar ist;
ii) einen Elektromotor (3), der einen mit der Impelleranordnung (2) in Eingriff stehenden Rotor (31) und einen den Rotor (31) umfangsseitig umgebenden Stator (32) umfasst;
iii) eine elektronische Steuerkarte (4) zum Steuern des Elektromotors (3), die in einem Endbereich der Pumpenanordnung (1) positioniert ist;
iv) einen Pumpenkörper (5), der ein erstes Element (51), ein Zwischenelement (52) und ein zweites Element (53) umfasst, wobei die Kopplung zwischen dem ersten Element (51) und dem Zwischenelement (52) eine erste Kammer (500'), oder Nasskammer, begrenzt, wobei die Kopplung zwischen dem Zwischenelement (52) und dem zweiten Element (53) eine zweite Kammer (500"), oder Trockenkammer, definiert, wobei die Impelleranordnung (2) in der ersten Kammer (500') untergebracht ist und wobei der Stator (32) und die elektronische Steuerkarte (4) in der zweiten Kammer (500'') untergebracht sind;
v) eine Vielzahl von elektrischen Verbindungsgruppen (6), vorzugsweise in einer Anzahl, die der Menge der Statorphasen entspricht, wobei jede elektrische Verbindungsgruppe (6) eine Statorvorrichtung (63) und eine Kartenvorrichtung (64) umfasst, die jeweils mit dem Stator (32) bzw. der elektronischen Steuerkarte (4) in Eingriff stehen und elektrisch mit diesen verbunden sind;
wobei die Pumpengruppe (1) **dadurch gekennzeichnet ist, dass** die Statorvorrichtung (63) einen Verbindungsabschnitt (634) umfasst, der radial elastisch nachgiebig ist, sodass beim Kontakt zwischen der Statorvorrichtung (63) und der Kartenvorrichtung (64) der Verbindungsabschnitt (634) in einer komprimierten Konfiguration vorliegt.

2. Pumpengruppe (1) nach Anspruch 1, wobei der Verbindungsabschnitt (634) einen Verbindungsscheitel (634') und zwei Abschnitte (634'') umfasst, die sich von dem Verbindungsscheitel (634') erstrecken, sodass bei mit der Kartenvorrichtung (64) in Eingriff stehendem Verbindungsscheitel (634') die Abschnitte (634'') komprimiert sind.

3. Pumpengruppe (1) nach einem der vorhergehenden Ansprüche, wobei sowohl die Statorvorrichtung (63) als auch die Kartenvorrichtung (64) jeweils entsprechend gefaltete Einzelmetallkomponenten sind.

4. Pumpengruppe (1) nach Anspruch 2, wobei sowohl die Statorvorrichtung (63) als auch die Kartenvorrichtung (64) aus einem leitfähigen Material hergestellt sind, beispielsweise aus einem Metallmaterial, vorzugsweise aus Kupfer oder einer Kupferlegierung, hergestellt sind.

5. Pumpengruppe (1) nach einem der vorhergehenden Ansprüche, wobei die Statorvorrichtung (63) ein Kabelende (630) umfasst, das mit einem elektrischen Statorkabel (320) in Eingriff steht, welches dazu geeignet ist, den Stator (32) elektrisch mit der Statorvorrichtung (63) zu verbinden, wobei das Kabelende (630) ein in sich gefalteter Flügel (631) ist, der einen hohlen Bereich (630') kennzeichnet.

6. Pumpengruppe (1) nach einem der vorhergehenden Ansprüche, wobei der Verbindungsabschnitt (634) eine Vielzahl von, vorzugsweise drei, Segmenten (6340) umfasst, die voneinander getrennt und elastisch nachgiebig sind.

7. Pumpengruppe (1) nach einem der vorhergehenden Ansprüche, wobei die Kartenvorrichtung (64) im Wesentlichen "U-förmig" ist und ein Kartenkontaktende (641), das mit der elektronischen Steuerkarte (4) in Eingriff steht und elektrisch mit dieser verbunden ist, und ein Verbindungsende (642), das mit dem Verbindungsabschnitt (634) in Eingriff bringbar ist, umfasst.

8. Pumpengruppe (1) nach Anspruch 7, wobei das Verbindungsende (642) an dem zweiten Element (53) positioniert ist.

9. Pumpengruppe (1) nach einem der vorhergehenden Ansprüche, wobei der Stator (32) radial mit dem zweiten Element (53) in Eingriff steht.

10. Pumpengruppe (1) nach einem der vorhergehenden Ansprüche, wobei der Verbindungsabschnitt (634) elastisch nachgiebig ist, sodass bei dem radialen Eingriff des Stators (32) mit dem zweiten Element (53) der Verbindungsabschnitt (634) in einer vorgespannten Konfiguration vorliegt.

11. Pumpengruppe (1) nach einem der vorhergehenden Ansprüche, wobei das Zwischenelement (52) eine Kopfwand (521), eine Seitenwand (522), die parallel zur Achse (X-X) verläuft und zwischen dem Rotor (31) und dem Stator (32) positioniert ist, und eine Bodenwand (523) umfasst, wobei die Pumpenanordnung (1) ferner eine an der Achse (X-X) positionierte feste Welle (8) umfasst, die fest mit der Bodenwand (523) in Eingriff steht, wobei die Impelleranordnung (2) und der Rotor (31) auf der festen Welle (8) frei drehbar sind.

12. Pumpengruppe (1) nach Anspruch 11, umfassend eine feste Buchse (9), die am Ende der festen Welle (8) positioniert ist, um der Impelleranordnung (2) ein axiales Widerlager bereitzustellen.

## Revendications

1. Groupe de pompes (1) pour un système de refroidissement d'un groupe de fonctionnement d'un véhicule, qui s'étend par rapport à un axe (X-X) et comprend :
i) un ensemble roue (2) rotatif par rapport à l'axe (X-X) ;
ii) un moteur électrique (3) comprenant un rotor (31) en prise avec l'ensemble roue (2) et un stator (32) entourant circonférentiellement le rotor (31) ;
iii) une carte de commande électronique (4) pour commander le moteur électrique (3), positionnée dans une région d'extrémité de l'ensemble de pompe (1) ;
iv) un corps de pompe (5) comprenant un premier élément (51), un élément intermédiaire (52) et un deuxième élément (53), dans lequel le couplage entre le premier élément (51) et l'élément intermédiaire (52) délimite une première chambre (500'), ou chambre humide, dans lequel le couplage entre l'élément intermédiaire (52) et le deuxième élément (53) définit une deuxième chambre (500"), ou chambre sèche, dans lequel l'ensemble roue (2) est logé dans la première chambre (500'), et dans lequel le stator (32) et la carte de commande électronique (4) sont logés dans la deuxième chambre (500") ;
v) une pluralité de groupes de connexion électrique (6) de préférence en un nombre égal à la quantité de phases de stator, dans lequel chaque groupe de connexion électrique (6) comprend un dispositif de stator (63) et un dispositif de carte (64) respectivement engagés et connectés électriquement au stator (32) et à la carte de commande électronique (4) ;
dans lequel le groupe de pompes (1) est **caractérisé en ce que** le dispositif de stator (63) comprend une partie de connexion (634) cédant élastiquement radialement de sorte que dans le contact entre le dispositif de stator (63) et le dispositif de carte (64), ladite partie de connexion (634) est dans une configuration comprimée.

2. Groupe de pompes (1) selon la revendication 1, dans lequel la partie de connexion (634) comprend un sommet de connexion (634') et deux sections (634") s'étendant à partir du sommet de connexion (634'), de sorte que lorsque le sommet de connexion (634') est en prise avec le dispositif de carte (64), lesdites sections (634") sont comprimées.

3. Groupe de pompes (1) selon l'une quelconque des revendications précédentes, dans lequel le dispositif de stator (63) et le dispositif de carte (64) sont respectivement des composants métalliques uniques pliés de manière appropriée.

4. Groupe de pompes (1) selon la revendication 2, dans lequel à la fois le dispositif de stator (63) et le dispositif de carte (64) sont faits d'un matériau conducteur, par exemple, ils sont faits d'un matériau métallique, de préférence de cuivre ou d'alliage de cuivre.

5. Groupe de pompes (1) selon l'une quelconque des revendications précédentes, dans lequel le dispositif de stator (63) comprend une extrémité de câble (630), engagée par un câble de stator électrique (320), appropriée pour connecter électriquement le stator (32) au dispositif de stator (63), dans lequel ladite extrémité de câble (630) est une aile (631) repliée sur elle-même identifiant une région creuse (630').

6. Groupe de pompes (1) selon l'une quelconque des revendications précédentes, dans lequel la partie de connexion (634) comprend une pluralité, de préférence trois, segments (6340) mutuellement séparés et élastiquement flexibles.

7. Groupe de pompes (1) selon l'une quelconque des revendications précédentes, dans lequel le dispositif de carte (64) est sensiblement en forme de « U », comprenant une extrémité de contact de carte (641) en prise avec et électriquement connectée à la carte de commande électronique (4), et une extrémité de connexion (642) pouvant venir en prise avec la partie de connexion (634).

8. Groupe de pompes (1) selon la revendication 7, dans lequel l'extrémité de connexion (642) est positionnée sur le deuxième élément (53).

9. Groupe de pompes (1) selon l'une quelconque des revendications précédentes, dans lequel le stator (32) s'engage radialement dans le deuxième élément (53).

10. Groupe de pompes (1) selon l'une quelconque des revendications précédentes, dans lequel la partie de connexion (634) est élastiquement flexible de sorte que dans l'engagement radial du stator (32) avec le deuxième élément (53), ladite partie de connexion (634) est dans une configuration préchargée.

11. Groupe de pompes (1) selon l'une quelconque des revendications précédentes, dans lequel l'élément intermédiaire (52) comsprend une paroi de tête (521), une paroi latérale (522) parallèle à l'axe (X-X) et positionnée entre le rotor (31) et le stator (32), et une paroi de fond (523), dans lequel l'ensemble pompe (1) comprend en outre un arbre fixe (8) positionné au niveau de l'axe (X-X), solidement en prise avec la paroi de fond (523), dans lequel l'ensemble roue (2) et le rotor (31) sont libres en rotation sur l'arbre fixe (8).

12. Groupe de pompes (1) selon la revendication 11, comprenant une douille fixe (9) positionnée à l'extrémité de l'arbre fixe (8) pour fournir à l'ensemble roue (2) un support axial.
